(19) Europäisches Patentamt
European Patent Office
Office européen des brevets

(11) Veröffentlichungsnummer: **0 344 106 A2**

# (12) EUROPÄISCHE PATENTANMELDUNG

(21) Anmeldenummer: **89810356.9**

(22) Anmeldetag: **16.05.89**

(51) Int. Cl.[4]: **C 09 B 67/22**
C 09 B 1/514, D 06 P 1/20

(30) Priorität: **24.05.88 CH 1963/88**

(43) Veröffentlichungstag der Anmeldung:
**29.11.89 Patentblatt 89/48**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Frey, Christian, Dr.**
**Rebgasse 40**
**CH-4132 Muttenz (CH)**

**Dill, Bernd, Dr.**
**Brunnenweg 19**
**CH-7888 Rheinfelden (DE)**

**Schmid, Konrad, Dr.**
**Burgstrasse 26**
**CH-4410 Liestal (CH)**

## (54) Blaue Dispersionsfarbstoffe und Mischungen blauer Dispersionsfarbstoffe.

(57) Zum Färben von Textilmaterial aus Polyester verwendet man das im Anspruch 1 aufgeführte Farbstoffgemisch bzw. einen der in den Ansprüchen 12 oder 13 aufgeführten Farbstoffe.

EP 0 344 106 A2

**Beschreibung**

**Blaue Dispersionsfarbstoffe und Mischungen blauer Dispersionsfarbstoffe**

Die vorliegende Erfindung betrifft blaue Dispersionsfarbstoffe, Mischungen blauer Dispersionsfarbstoffe, Verfahren zu deren Herstellung, Farbstoffpräparate, die diese Farbstoffgemische enthalten, sowie deren Verwendung zum Färben von Textilmaterial.

Die erfindungsgemässen Farbstoffgemische enthalten mindestens einen Farbstoff einer jeden der folgenden Formeln

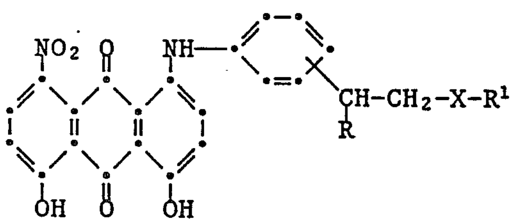

(1)

und

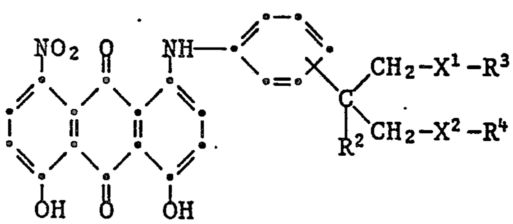

(2)

worin

R und $R^2$ unabhängig voneinander je Wasserstoff oder $C_1$-$C_4$-Alkyl,
$R^1$, $R^3$ und $R^4$ unabhängig voneinander je Wasserstoff oder $C_1$-$C_8$-Alkyl und
X, $X^1$ und $X^2$ unabhängig voneinander je O oder S bedeuten.

Als Alkylgruppen R und $R^2$ kommen Methyl, Ethyl, n-Propyl, iso-Propyl, n-, sec-, tert.- oder iso-Butyl in Betracht.

Vorzugsweise bedeuten R und $R^2$ unabhängig voneinander Methyl oder Wasserstoff, vor allem Wasserstoff.

Unter Alkylgruppen $R^1$, $R^3$ und $R^4$ sind geradkettige oder verzweigte oder cyclische Alkylgruppen mit 1 bis 8 Kohlenstoffatomen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, Cyclopentyl, Cyclohexyl, Methylcyclohexyl sowie die dazugehörenden Isomeren.

Diese Alkylreste können substituiert sein, z.B. durch Hydroxy, Alkoxy mit 1 bis 4 Kohlenstoffatomen, insbesondere Methoxy, Halogen, wie Brom oder Chlor, Cyano oder Phenyl.

Vorzugsweise bedeuten $R^1$, $R^3$ und $R^4$ unabhängig voneinander je Methyl, Ethyl oder Wasserstoff, vor allem Wasserstoff.

Die bevorzugte Bedeutung von X, $X^1$ und $X^2$ ist jeweils Sauerstoff.

Bevorzugte erfindungsgemässe Farbstoffmischungen enthalten

a) 50-90 Gew.% mindestens eines Farbstoffes der Formel (1),
b) 5-50 Gew.% mindestens eines Farbstoffes der Formel (2) sowie
c) 0-30 Gew.% eines oder mehrerer weiterer Farbstoffe der 1,8-Dihydroxy-4-nitroanthrachinon-Reihe.

Unter diesen sind diejenigen Farbstoffmischungen besonders bevorzugt, welche

a) 55-80 Gew.% mindestens eines Farbstoffes der Formel (1),
b) 10-30 Gew.% mindestens eines Farbstoffes der Formel (2) sowie
c) 0 bis 25 Gew.% eines oder mehrerer weiterer Farbstoffe der 1,8-Dihydroxy-4-nitroanthrachinon-Reihe enthalten.

Wegen ihrer guten färberischen Eigenschaften und ihrer leichten Herstellbarkeit sind Farbstoffmischungen, enthaltend

a) 55-80 Gew.% des Farbstoffes der Formel

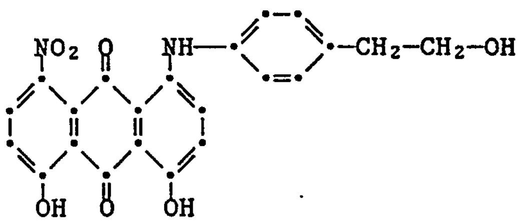

(3)

b) 10-30 Gew.% eines oder mehrerer Farbstoffe der Formel

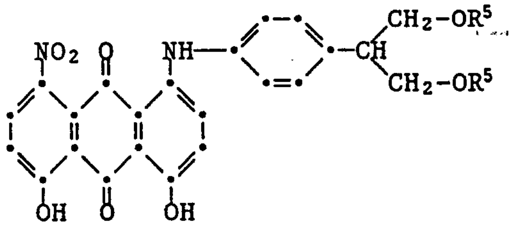

(4)

worin $R^5$ Wasserstoff oder Methyl bedeutet, sowie

c) 0-25 Gew.% eines oder mehrerer weiterer Farbstoffe der 1,8-Dihydroxy-4-nitroanthrachinon-Reihe ganz besonders bevorzugt.

Bei den Komponenten c) handelt es sich z.B. um 1,8-Dihydroxy-4-nitro-5-aminoanthrachinon oder um 1,8-Dihydroxy-4-nitro-5-(p-methyl)phenylaminoanthrachinon.

Die erfindungsgemässen Farbstoffmischungen werden z.B. erhalten, indem man mindestens einen Farbstoff der Formel (1) und mindestens einen Farbstoff der Formel (2) miteinander vermischt. Vorteilhaft setzt man der Mischung noch Dispergiermittel, z.B. solche anionischer oder nichtanionischer Natur, sowie Wasser zu und vermahlt die Mischung mit Hilfe von Mahlhilfsmitteln (z.B. Glaskugeln oder Quarzsand) zu einer gebrauchsfertigen Dispersion.

Das bevorzugte Verfahren zur Herstellung der erfindungsgemässen Farbstoffgemische besteht jedoch darin, dass man 1 8-Dihydroxy-4,5-dinitroanthrachinon

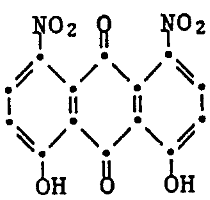

(5)

mit einem Gemisch aus mindestens einem Amin der Formel

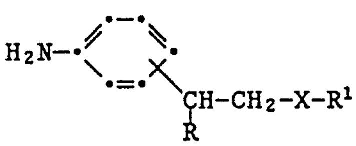

(6)

und mindestens einem Amin der Formel

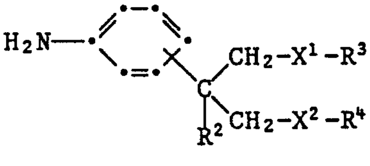

(7)

umsetzt, worin R, $R^1$, $R^2$, $R^3$, $R^4$, X, $X^1$ und $X^2$ die unter der Formel (2) angegebene Bedeutung aufweisen.

Vorzugsweise setzt man als Amine der Formeln (6) und (7) solche Verbindungen ein, bei denen die Seitenketten jeweils in p-Stellung zur Aminogruppe stehen.

Die Verbindungen der Formeln (5), (6) und (7) sind bekannt.

Die Verbindungen der Formeln (6) und (7) stellt man z.B. her, indem man ein Nitroalkylbenzol der Formel

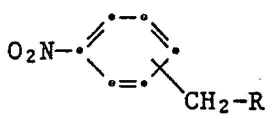

(8)

worin R Wasserstoff oder $C_1$-$C_4$-Alkyl bedeutet, mit Formaldehyd oder Thioformaldehyd (bzw. Verbindungen, welche diese Aldehyde abspalten) umsetzt und in dem erhaltenen Reaktionsgemisch die Nitrogruppe zur Aminogruppe reduziert und gegebenenfalls die endständige OH- bzw. SH-Gruppe alkyliert.

Die Reaktionsbedingungen für die Umsetzung der Verbindungen der Formel (8) mit dem Aldehyd entsprechen z.B. den in der CH-PS 500.938 aufgeführten Bedingungen. Die Reduktion der Nitro- zur Aminogruppe erfolgt ebenfalls unter bekannten üblichen Reaktionsbedingungen.

Man erhält auf diese Weise Gemische der Amine der Formeln (6) und (7) und setzt diese Gemische vorzugsweise ohne Trennung mit dem 1,8-Dihydroxy-4,5-dinitroanthrachinon um.

Diese Umsetzung erfolgt unter an sich bekannten Bedingungen, z.B. in einem organischen Lösungsmittel bei einer Temperatur zwischen 100 und 150°C während 5 bis 10 Stunden. Anschliessend werden die erhaltenen Farbstoffmischungen wie üblich isoliert, z.B., indem man das Reaktionsgemisch bis ca. 0 bis 10°C in verdünnte Säure gibt und die ausgeschiedene Farbstoffmischung abfiltriert.

Verwendung finden die erfindungsgemässen Farbstoffmischungen zum Färben und Bedrucken von Textilmaterialien, welche mit Dispersionsfarbstoffen färbbar sind. Vor ihrer Verwendung werden die Farbstoffgemische vorteilhaft in Farbstoffpräparate übergeführt. Hierzu kann man sie zerkleinern, so dass ihre Teilchengrösse im Mittel zwischen 0,01 und 10 µm beträgt. Das Zerkleinern kann in Gegenwart von Dispergiermitteln erfolgen.

Anionische Dispergiermittel, die dafür geeignet sind, sind beispielsweise Kondensationsprodukte aus Naphthalinsulfonsäuren und Formaldehyd, insbesondere Dinapthalinmethandisulfonate oder modifizierte Ligninsulfonate. Geeignete nichtionische Dispergiermittel sind z.B. Anlagerungsprodukte von etwa 3 bis 40 Mol Ethylenoxid an Alkylphenole, Fettalkohole oder Fettamine.

Beispielsweise wird das getrocknete Farbstoffgemisch mit einem Dispergiermittel gemahlen oder in Pastenform mit einem Dispergiermittel geknetet und hierauf im Vakuum oder durch Zerstäuben getrocknet. Mit den so erhaltenen Präparaten kann man, nach Zugabe von Wasser, in langer Flotte (Flottenverhältnis grösser als 1:5) oder kurzer Flotte (Flottenverhältnis 1:1 bis 1:5) färben, klotzen oder bedrucken.

Die Farbstoffpräparate enthalten vorzugsweise

a) 40-80 Gew.% einer erfindungsgemässen Farbstoffmischung,
b) 30-70 Gew.% eines Dispergators sowie
c) 0-30 Gew.% anderer üblicher Zusätze.

Als andere übliche Zusätze können z.B. Stellmittel, Salze, Puffersubstanzen, Mittel, die das Stauben der trockenen Präparate und/oder das Schäumen der wässrigen Dispersionen verhindern, verwendet werden.

Die neuen Farbstoffmischungen ziehen aus wässriger Dispersion ausgezeichnet auf Textilmaterialien aus vollsynthetischen oder halbsynthetischen hochmolekularen Stoffen auf. Besonders geeignet sind sie zum Färben, Klotzen oder Bedrucken von Fasern, Fäden oder Vliesen, Geweben oder Gewirken, insbesondere Fasern, aus linearen, aromatischen Polyestern. Diese sind im allgemeinen Polykondensationsprodukte aus Terephthalsäure und Glykolen, besonders Ethylenglykol, oder Polykondensationsprodukte aus Terephthalsäure und 1,4-Bis-(hydroxymethyl)hexahydrobenzol.

Man färbt die Polyesterfasern beispielsweise nach an sich bekannten Verfahren in Gegenwart von Carriern bei Temperaturen zwischen etwa 80 und 125°C, oder in Abwesenheit von Carriern unter Druck bei etwa 100 bis 140°C nach dem Ausziehverfahren. Ferner kann man diese Fasern mit den wässrigen Dispersionen der Farbstoffmischungen klotzen oder bedrucken und die erhaltene Imprägnierung bei etwa 140° bis 230°C fixieren, z.B. mit Hilfe von Wasserdampf, Kontakthitze oder heisser Luft.

Meist gibt man die üblichen, bereits genannten Dispergiermittel zu, die vorzugsweise anionisch oder nichtionogen sind und auch im Gemisch miteinander verwendet werden können.

Beim Klotzen und Bedrucken kann man die üblichen Verdickungsmittel verwenden, z.B. modifizierte oder nichtmodifizierte natürliche Produkte, beispielsweise Alginate, Britischgummi, Gummi arabicum, Kristallgummi, Johannisbrotkernmehl, Tragant, Carboxymethylcellulose, Hydroxyäthylcellulose, Stärke oder synthetische Produkte, beispielsweise Polyacrylamide oder Polyvinylalkohole.

Die in den erfindungsgemässen Farbstoffmischungen enthaltenen Farbstoffe sind zum Teil bekannt, z.B. diejenigen der Formeln (1) und (2), wobei R, $R^1$, $R^2$, $R^3$ und $R^4$ jeweils H und X, $X^1$ und $X^2$ jeweils O bedeuten, aus der GB-PS 716.937 und der US-PS 2.641.602. Diese Farbstoffe werden durch Kondensation von 1,8-Dihydroxy-4,5-dinitroanthrachinon mit 4-(2-Hydroxyethyl)-anilin bzw. 4-(1,3-Dihydroxy-iso-propyl)-anilin erhalten. Die Herstellung dieser Farbstoffe ist jedoch sehr aufwendig, da die beiden aufgeführten Aniline nur mit grossem Aufwand rein dargestellt werden können. Ihre Synthese erfolgt nämlich durch Nitrierung und Reduktion der entsprechenden Hydroxyalkylbenzole in Essigsäure oder Acetanhydrid, wobei die Nitrierung wegen des Explosionsrisikos erhebliche Sicherheitsmassnahmen erfordert.

Zur Herstellung der erfindungsgemässen Farbstoffmischungen kann man dagegen eine Mischung entsprechender Amine verwenden, welche problemlos durch Umsetzung von Nitroalkylbenzolen mit Aldehyd und anschliessende Reduktion erhalten werden. Die Nitrierung der Alkylbenzole lässt sich so durchführen, dass kein Sicherheitsrisiko besteht.

Ueberraschenderweise lassen sich die Mischungen aus den Aminen der Formel (6) und (7) ohne Auftrennung mit 1,8-Dihydroxy-4,5-dinitroanthrachinon zu den erfindungsgemässen Farbstoffmischungen umsetzen und man erhält mit diesen Farbstoffmischungen auf Textilmaterial aus z.B. Polyester blaue Färbungen, welche sich vor allem durch Reinheit, gutes Aufbauvermögen sowie gute Echtheiten, insbesondere Sublimier- und Lichtechtheit, auszeichnen.

Die Farbstoffe der Formeln

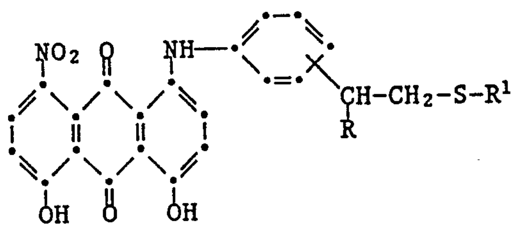

(9)

und

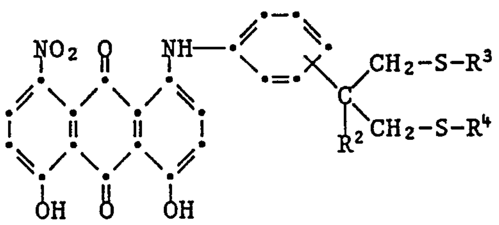

(10)

worin

R und $R^2$ unabhängig voneinander je Wasserstoff oder $C_1$-$C_4$-Alkyl und $R^1$, $R^3$ und $R^4$ unabhängig voneinander je Wasserstoff oder $C_1$-$C_8$-Alkyl bedeuten, sind neu und stellen einen weiteren Gegenstand der vorliegenden Erfindung dar.

Ebenfalls neu sind die Farbstoffe der Formeln

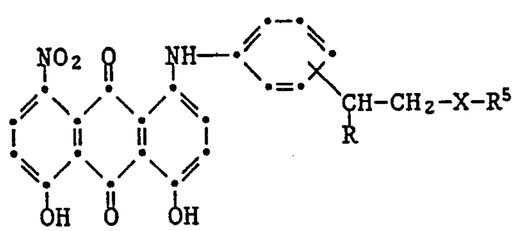

(11)

und

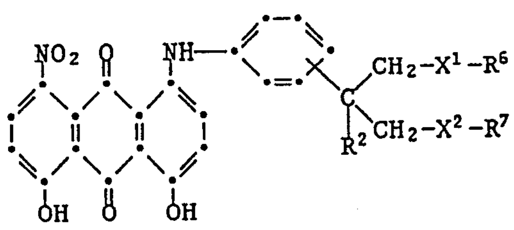

(12)

worin

R und $R^2$ unabhängig voneinander je Wasserstoff oder $C_1$-$C_4$-Alkyl,

$R^5$, $R^6$ und $R^7$ unabhängig voneinander je $C_1$-$C_8$-Alkyl und

X, $X^1$ und $X^2$ unabhängig voneinander je O oder S bedeuten.

Die Farbstoffe der Formeln (11) und (12) stellen einen weiteren Gegenstand der vorliegenden Erfindung dar.

Die Farbstoffe der Formeln (9) bis (12) stellt man auf analoge Art dar wie die erfindungsgemässen Farbstoffgemische, enthaltend einen Farbstoff der Formeln (1) und (2), indem man 1,8-Dihydroxy-4,5-dinitro-

anthrachinon mit einem Amin der Formel

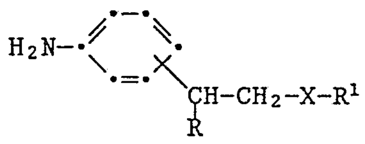

(6)

oder einem Amin der Formel

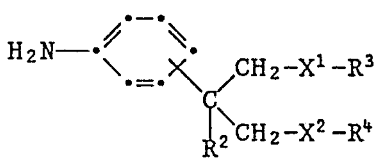

(13)

umsetzt, worin R, $R^1$, $R^2$, $R^3$, $R^4$ X, $X^1$ und $X^2$ die unter der Formel (2) angegebene Bedeutung aufweisen.

Die Verwendung der Farbstoffe der Formeln (9) bis (12) entspricht der Verwendung der erfindungsgemässen Farbstoffgemische.

In den nachfolgenden Beispielen beziehen sich die Prozentangaben auf das Gewicht, sofern nichts anderes angegeben ist. Die Temperaturen sind in Grad Celsius angegeben.

Beispiel 1:

Ein Gemisch von 19,4g 1,8-Dihydroxy-4,5-dinitro-anthrachinon, 25,0 g einer Mischung, bestehend aus ca. 72 % 2-(4-Amino-phenyl)ethanol, ca. 22 % 2-(4-Amino-phenyl)-propan-1,3-diol, ca. 3 % 4-Toluidin und Nebenprodukten, sowie 140 g Diethylenglykol-monomethylether wird innert 2,5 Std. auf 130°C erwärmt. Man rührt noch 6 Std. bei 130-135°C nach und trennt dabei das Reaktionswasser destillativ ab. Man kühlt auf 100°C ab und trägt die Reaktionsmischung auf ein Gemisch von 250 g Wasser, 250 g Eis und 110 g Salzsäure 32 % aus. Man filtriert diese Rohfarbstoff-Suspension bei ca. 20°C und wäscht mit ca. 3 Liter Wasser nach. Nach dem Trocknen erhält man 27 g einer Farbstoffmischung, enthaltend 65 % des Farbstoffes der Formel

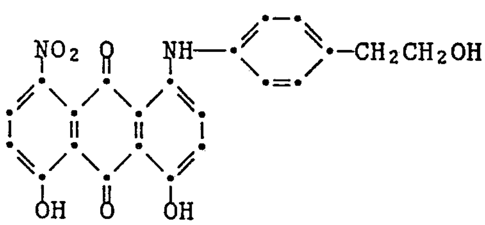

13 % des Farbstoffes der Formel

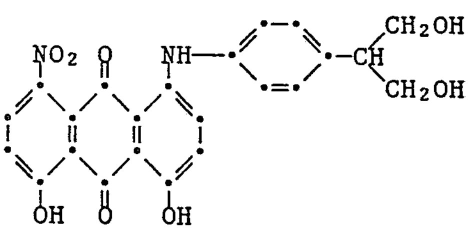

3 % des Farbstoffes der Formel

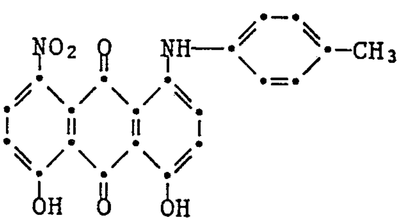

7 % 1,8-Dihydroxy-4-nitro-5-aminoanthrachinon sowie

2-Phenylpropan-1,3-diol und Phenylethanol.

Beispiel 2:

Ein Gemisch von 90,2 g 1,8-Dihydroxy-4,5-dinitro-anthrachinon, 145,3 g Rohamin, bestehend aus ca. 65% 4-(4-Amino-phenyl)-2,6-dioxa-heptan, ca. 10 % 4-(4-Amino-phenyl)-2-oxa-butan, ca. 7 % 2-(4-Amino-phenyl)-ethanol, ca. 2 % 2-(4-Amino-phenyl)-propan-1,3-diol, ca. 2 % 4-Aminotoluol, ca. 14 % Nebenprodukten (unter anderem Methoxyderivate des 2-(4-Amino-phenyl)-t-butan-triols), sowie 840 g Diethylenglykol-monomethylether wird innert 1 1/4 Std. auf 133°C erwärmt.

Man rührt noch 6 Std. bei 130-135°C nach und trennt dabei das Reaktionswasser destillativ ab. Man kühlt auf 100°C ab und trägt die Reaktionsmischung auf ein Gemisch von 1250 g Wasser, 1250 g Eis und 550 g Salzsäure 32 % aus. Man filtriert diese Rohfarbstoff-Suspension bei ca. 20°C und wäscht mit ca. 3 l Wasser nach. Das feuchte Pressgut (ca. 300 g, entsprechend ca. 140 g trockenem Rohfarbstoff) wird mit einem Ligninsulfonat-Dispergator so dispergiert und sprühgetrocknet, dass das erhaltene Farbstoffpulver ca. 25 % Rohfarbstoff und ca. 70 % Dispgerator enthält. Polyesterfasern werden damit in lichtechten, blauen Farbtönen gefärbt.

Beispiel 3:

Ein Gemisch von 19,4 g 1,8-Dihydroxy-4,5-dinitro-anthrachinon, 25,0 g Rohamin, bestehend aus ca. 78 % 2-(4-Amino-phenyl)-thioethanol, ca. 17 % 2-(4-Amino-phenyl)-propan-1,3-dithiol, ca. 3 % 4-Toluidin und Nebenprodukten, sowie 140 g Diethylenglykol-monomethylether wird im Stickstoffstrom innert 2,5 Std. auf 130°C erwärmt. Man rührt noch 6 Std. bei 130-135°C nach und trennt dabei das Reaktionswasser destillativ ab. Man kühlt auf 100°C ab und trägt die Reaktionsmischung auf ein Gemisch von 250 g Wasser, 250 g Eis und 110 g Salzsäure 32 % aus.

Man filtriert diese Rohfarbstoff-Suspension bei ca. 20°C und wäscht mit ca. 3 l Wasser nach. Man erhält ca. 86 g feuchtes Pressgut, enthaltend ca. 27 g trockenen Rohfarbstoff.

Der trockene Rohfarbstoff enthält die Farbstoffe der Formeln

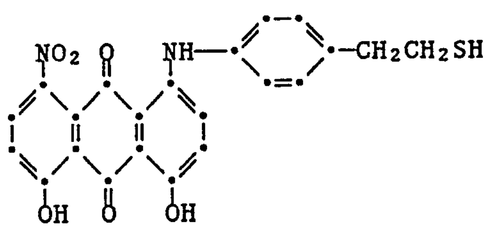

,

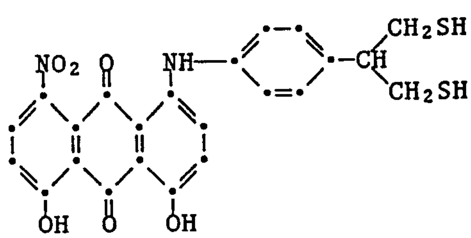

und

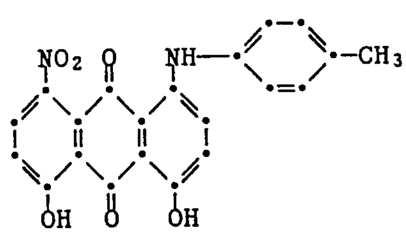

ungefähr im Verhältnis 81:15:4.

Dieses Rohfarbstoff-Gemisch wird mit einem Ligninsulfonat-Dispergator so dispergiert und sprühgetrocknet, dass das erhaltene Farbstoffpulver ca. 25 % Rohfarbstoff und ca. 70 % Dispergator enthält. Polyesterfasern werden damit in lichtechten, blauen Farbtönen gefärbt.

Beispiel 4:

Arbeitet man wie im Beispiel 1 beschrieben, verwendet jedoch anstelle der dort eingesetzten Amin-Mischung eine äquivalente Menge einer Mischung, bestehend aus den Aminen der Formel

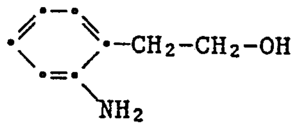

und

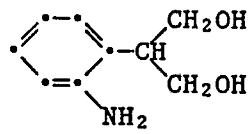

im Verhältnis 65:13, so erhält man eine Mischung aus den Farbstoffen der Formeln

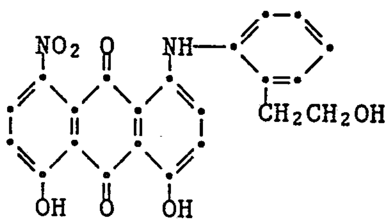

und

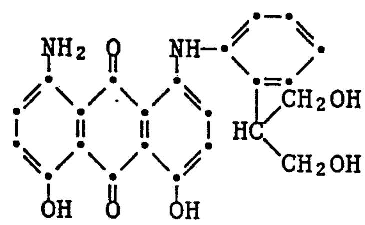

Polyesterfasern werden damit in lichtechten, blauen Farbtönen gefärbt.

Beispiel 5:

Arbeitet man wie im Beispiel 1 beschrieben, verwendet jedoch anstelle der dort eingesetzten Amin-Mischung eine äquivalente Menge 4-(4-Aminophenyl)-2-oxa-butan, so erhält man den Farbstoff der Formel

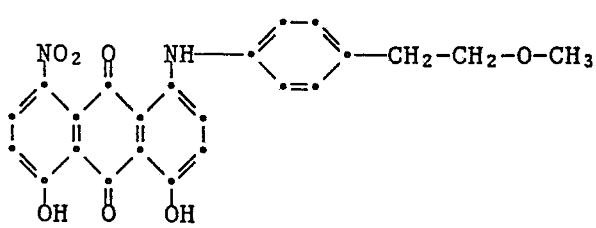

welcher Polyesterfasern in lichtechten blauen Farbtönen färbt.

Beispiel 6:

Arbeitet man wie im Beispiel 1 beschrieben, verwendet jedoch anstelle der dort eingesetzten Amin-Mischung eine äquivalente Menge 2-(4-Aminophenyl)-thioethanol, so erhält man den Farbstoff der Formel

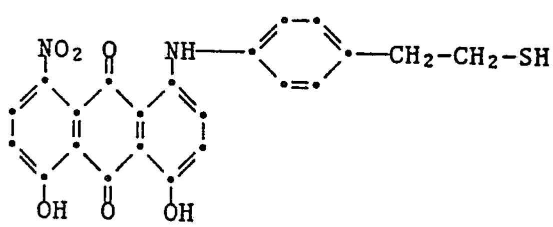

welcher Polyesterfasern in lichtechten blauen Farbtönen färbt.

Beispiel 7:

1 Teil der gemäss Beispiel 1 erhaltenen Farbstoffmischung und 3 Teile eines Ligninsulfonat-Dispergators wurde auf übliche Weise in Wasser vermahlen und anschliessend sprühgetrocknet.

Man erhält ein pulverförmiges Farbstoffpräparat.

Beispiel 8:

2 Teile des gemäss Beispiel 7 erhaltenen Farbstoffpräparates werden in 4000 Teilen Wasser, enthaltend 12 Teile des Natriumsalzes von o-Phenylphenol, 2 Teile Ammoniumsulfat sowie 2 Teile des Natriumsalzes der Dinaphthylmethandisulfonsäure, dispergiert. Dann färbt man 100 Teile Garn aus Polyethylenglykolterephthalat 90 Minuten lang bei 95 bis 98° in dieser Flotte.

Die Färbung wird anschliessend gespült und mit wässriger Natronlauge und einem Dispergator nachbehandelt. Man erhält so eine licht- und sublimierechte blaue Färbung.

Beispiel 9:

1 Teil der gemäss Beispiel 1 erhaltenen Farbstoffmischung wird mit 2 Teilen einer 50%igen wässerigen Lösung des Natriumsalzes der Dinaphthylmethandisulfonsäure nass vermahlen und getrocknet.

Dieses Farbstoffpräparat wird mit 40 Teilen einer 10%igen wässerigen Lösung des Natriumsalzes der N-Benzylheptadecyl-benzimidazoldisulfonsäure verrührt und 4 Teile einer 40%igen Essigsäurelösung zugegeben. Durch Verdünnen mit Wasser wird daraus ein Färbebad von 4000 Teilen bereitet.

In dieses Bad geht man bei 50° mit 100 Teilen eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine blaue Färbung mit guten Echtheiten, insbesondere guter Sublimations- und Lichtechtheit.

**Patentansprüche**

1. Farbstoffgemisch, enthaltend mindestens einen Farbstoff einer jeden der folgenden Formeln

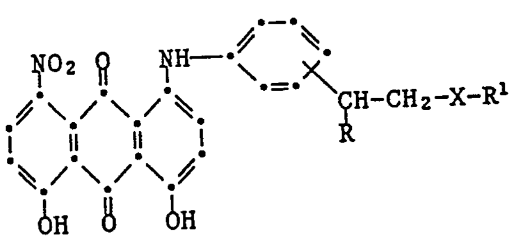

(1)

und

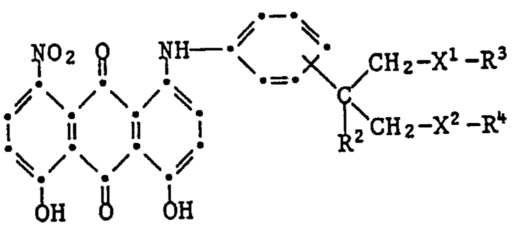

(2)

worin

R und $R^2$ unabhängig voneinander je Wasserstoff oder $C_1$-$C_4$-Alkyl,

$R^1$, $R^3$ und $R^4$ unabhängig voneinander je Wasserstoff oder $C_1$-$C_8$-Alkyl und

X, $X^1$ und $X^2$ unabhängig voneinander je O oder S bedeuten.

2. Farbstoffgemisch gemäss Anspruch 1, enthaltend

a) 50-90 Gew.% mindestens eines Farbstoffes der Formel (1),

b) 5-50 Gew.% mindestens eines Farbstoffes der Formel (2) sowie

c) 0-30 Gew.% eines oder mehrerer weiterer Farbstoffe der 1 8-Dihydroxy-4-nitroanthrachinon-Reihe.

3. Farbstoffgemisch gemäss Anspruch 2, enthaltend

a) 55-80 Gew.% mindestens eines Farbstoffes der Formel (1),

b) 10-30 Gew.% mindestens eines Farbstoffes der Formel (2) sowie

c) 0 bis 25 Gew.% eines oder mehrerer weiterer Farbstoffe der 1,8-Dihydroxy-4-nitroanthrachinon-Reihe.

4. Farbstoffgemisch gemäss einem der Ansprüche 1-3, dadurch gekennzeichnet, dass es nur einen Farbstoff der Formel (1) und einen Farbstoff der Formel (2) enthält.

5. Farbstoffgemisch gemäss einem der Ansprüche 1-4, dadurch gekennzeichnet, dass X, $X^1$ und $X^2$ je Sauerstoff bedeuten.

6. Farbstoffgemisch gemäss einem der Ansprüche 1-5, dadurch gekennzeichnet, dass R und $R^2$ je Methyl oder vor allem Wasserstoff bedeuten.

7. Farbstoffgemisch gemäss einem der Ansprüche 1-6, dadurch gekennzeichnet, dass $R^1$, $R^3$ und $R^4$ je Methyl, Ethyl oder vor allem Wasserstoff bedeutet.

8. Farbstoffgemisch gemäss einem der Ansprüche 1-7, enthaltend

a) 55-80 Gew.% des Farbstoffes der Formel

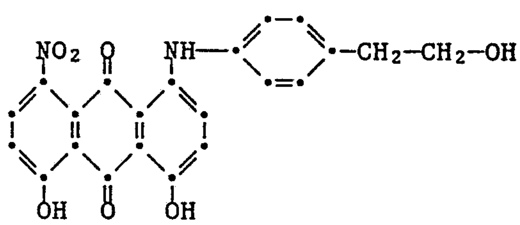

(3)

b) 10-30 Gew.% eines oder mehrerer Farbstoffe der Formel

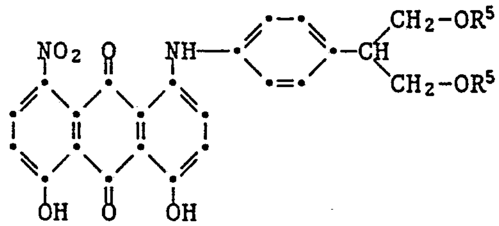

(4)

worin $R^5$ Wasserstoff oder Methyl bedeutet, sowie

c) 0-25 Gew.% eines oder mehrerer weiterer Farbstoffe der 1,8-Dihydroxy-4-nitroanthrachinon-Reihe.

9. Dispersionsfarbstoff-Präparation, bestehend aus

a) 40 bis 80 Gew.% eines Farbstoffgemisches gemäss einem der Ansprüche 1 bis 8,

b) 30 bis 70 Gew.% eines Dispergators sowie

c) 0 bis 30 Gew.% anderer üblicher Zusätze.

10.Verwendung der Farbstoffgemische gemäss einem der Ansprüche 1-8 zum Färben von Textilmaterial, insbesondere solchem aus aromatischen Polyestern.

11. Das unter Verwendung der Farbstoffmischungen gemäss einem der Ansprüche 1-8 gefärbte Material

12. Farbstoffe der Formeln

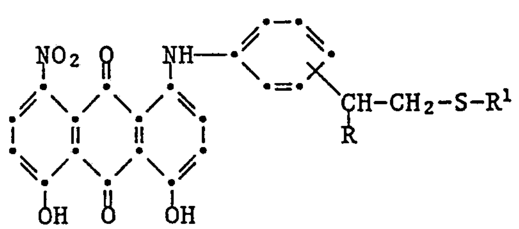

(9)

und

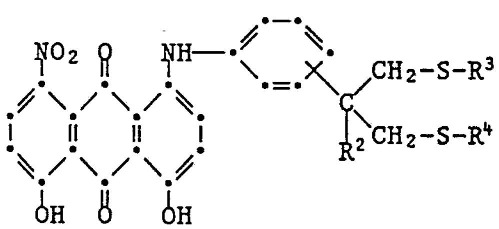

(10)

worin

R und $R^2$ unabhängig voneinander je Wasserstoff oder $C_1$-$C_4$-Alkyl, und $R^1$, $R^3$ und $R^4$ unabhängig voneinander je Wasserstoff oder $C_1$-$C_8$-Alkyl bedeuten.

13. Farbstoffe der Formeln

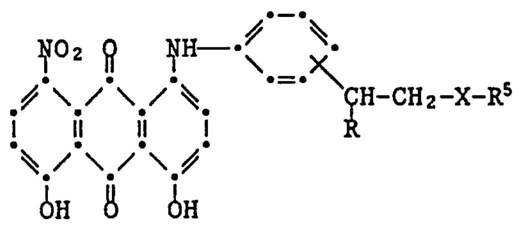

(11)

und

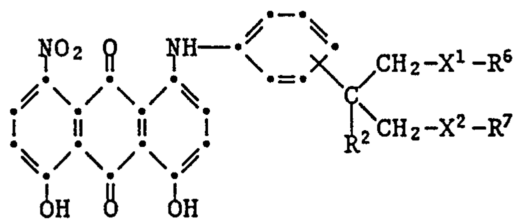

(12)

worin

R und $R^2$ unabhängig voneinander je Wasserstoff oder $C_1$-$C_4$-Alkyl,

$R^5$, $R^6$ und $R^7$ unabhängig voneinander je $C_1$-$C_8$-Alkyl und

X, $X^1$ und $X^2$ unabhängig voneinander je O oder S bedeuten.